Europäisches Patentamt

European Patent Office

Office européen des brevets

(19)

(11) Numéro de publication : **0 369 832 B1**

(12)

# FASCICULE DE BREVET EUROPEEN

(45) Date de publication du fascicule du brevet :
**14.04.93 Bulletin 93/15**

(51) Int. Cl.[5] : **H04L 27/12**

(21) Numéro de dépôt : **89402337.3**

(22) Date de dépôt : **24.08.89**

(54) **Modulation à sauts de phase linéaires et à enveloppe constante.**

(30) Priorité : **20.09.88 FR 8812269**

(43) Date de publication de la demande :
**23.05.90 Bulletin 90/21**

(45) Mention de la délivrance du brevet :
**14.04.93 Bulletin 93/15**

(84) Etats contractants désignés :
**DE GB IT**

(56) Documents cités :
**US-A- 4 481 489**
**COMPUTER DESIGN, vol. 14, no. 7, July 1975,**
**pages 100-102, Concord, US; J.D. FOGARTY:**
**"Digital synthesizers produce wide frequency**
**range from single source"**
**PATENT ABSTRACTS OF JAPAN, vol. 8, no.**
**127 (E-250)[1564], 14th June 1984 & JP-A-59 37**
**756**

(56) Documents cités :
**IEEE TRANSACTIONS ON COMMUNICA-**
**TIONS, vol. com-22, no. 10, October 1974,**
**pages 1576-1584, IEEE, New York, US; M.K.**
**SIMON et al.: "Offset quadrature communica-**
**tions with decision-feedback carrier synchro-**
**nization"**

(73) Titulaire : **SAT (Société Anonyme de**
**Télécommunications)**
**6, avenue d'Iéna**
**F-75116 Paris (FR)**

(72) Inventeur : **Oliveau, Jean-Jacques Raymond**
**41, rue Cantagrel**
**F-75631 Paris Cédex 13 (FR)**
Inventeur : **Roger, Christian Michel**
**41, rue Cantagrel**
**F-75631 Paris Cédex 13 (FR)**

(74) Mandataire : **Cabinet Martinet & Lapoux**
**BP 405**
**F-78055 Saint Quentin en Yvelines Cédex (FR)**

EP 0 369 832 B1

EP 0 369 832 B1

**Description**

La présente invention concerne un procédé de modulation de phase notamment à deux ou quatre états de phase, offrant une enveloppe constante et des lobes secondaires de spectre réduits, ainsi que des modulateurs mettant en oeuvre ce procédé.

Une telle modulation est particulièrement destinée à des faisceaux hertziens numériques pour lesquels est requise une bonne efficacité spectrale, et donc une largeur de bande réduite, afin d'utiliser au mieux les plans de fréquence alloués où la densité de fréquence est relativement élevée. Toutefois, cette bonne efficacité spectrale doit être compatible avec un faible coût du modulateur impliquant la mise en oeuvre d'une modulation à très faible nombre d'états, égal à deux ou quatre. Une bonne conformation spectrale, due à une décroissance rapide des lobes secondaires, permet d'amplifier le signal modulé sortant du modulateur par des dispositifs fortement non linéaires, du genre amplificateur en classe C.

Une modulation de phase présentant déjà une bonne conformation spectrale est la modulation du type à déphasage minimum MSK (en Anglais "Minimum Shift Keying") qui est décrite dans l'article de Steven A. GRONEMEYER et Alan L. McBRIDE, intitulé "MSK and Offset QPSK Modulation", paru dans IEEE TRANSACTIONS ON COMMUNICATIONS, Vol. COM-24, N° 8, août 1976, pages 809 à 819. En modulation MSK par exemple à deux états $+\pi/2$ et $-\pi/2$, le signal modulé sortant du modulateur a une phase qui avance linéairement de $\pi/2$ par rapport à la porteuse en réponse à chaque bit "1" du signal numérique entrant dans le modulateur, et une phase qui retarde linéairement de $\pi/2$ par rapport à la porteuse en réponse à chaque bit "0" du signal numérique entrant, ou inversement. Dans le signal modulé du type MSK, la phase varie donc linéairement pendant chaque intervalle élémentaire du signal entrant, soit dans un sens soit dans l'autre sens en fonction de l'état du bit dans cet intervalle, et aucun état stable de phase n'est prévu. La modulation de phase MSK est ainsi équivalente à une modulation à deux états de fréquence qui sont situées de part et d'autre de la fréquence de la porteuse et qui offrent une différence avec celle-ci définissant une excursion de fréquence égale au quart de la fréquence binaire du signal entrant.

Toutefois, si le signal modulé obtenu par la modulation MSK offre une atténuation des premiers lobes secondaires par rapport au lobe principal, de l'ordre d'au moins 20 dB, la largeur du lobe principal est encore relativement élevée, de l'ordre de 1,5 fois plus grande que celle du lobe principal d'un signal modulé obtenu par la modulation du type OK-QPSK (en Anglais "offset keyed quadrature phase shift keying") également décrite dans l'article précité. Pour la modulation OK-QPSK, la décroissance des lobes secondaires est moins rapide que celle pour la modulation MSK.

La présente invention vise donc à fournir un procédé de modulation de phase offrant les avantages de la modulation MSK sans ses inconvénients, c'est-à-dire une modulation de phase pour laquelle les lobes secondaires sont très atténués et la largeur du lobe principal est plus réduite.

A cette fin, un procédé pour moduler la phase d'une porteuse ayant une fréquence prédéterminée en fonction d'un signal numérique entrant ayant une fréquence binaire prédéterminée en une porteuse modulée ayant des états de phase équirépartis, est caractérisé en ce que la porteuse modulée comprend des premiers intervalles où la phase est stable et égale à l'état de phase à la fin de l'intervalle précédent en réponse à un état binaire dans un intervalle élémentaire du signal numérique égal à celui dans l'intervalle précédent, et des seconds intervalles où la phase varie linéairement entre deux états de phase consécutifs en réponse à un intervalle du signal numérique débutant par une transition binaire, le sens de rotation de la phase au début d'un second intervalle étant déterminé en fonction d'une variable.

Le signal modulé offre une modulation d'amplitude nulle. Le signal modulé peut être alors amplifié en hyperfréquence par des circuits fortement non linéaires. La présence des intervalles à phase stable contribue à réduire la largeur du lobe principal du signal modulé.

Lorsque la modulation de phase est du type à deux états de phase, par exemple 0 et $\pm\pi$, la porteuse modulée est équivalente à un signal modulé ayant trois états de fréquence, un état central de fréquence égal à la fréquence de la porteuse lorsque ladite phase est stable dans lesdits premiers intervalles, et des premier et second états de fréquence respectivement lorsque la phase varie linéairement dans lesdits seconds intervalles et ladite variable indiquant le sens de rotation de phase est négative ou positive, la différence entre l'état central et l'un des premiers et second états de fréquence définissant une excursion de fréquence égale à la moitié de la fréquence du signal numérique entrant.

Lorsque la modulation de phase est du type à quatre états de phase, par exemple 0, $+\pi/2$, $\pi$, et $3\pi/2$, le signal numérique entrant est composé de deux signaux numériques parallèles ayant respectivement des bits pairs et impairs du signal numérique entrant et incluant quatre couples de bits parallèles pair et impair respectivement associés aux quatre états de phase, un couple étant transmis dans un intervalle, et

la porteuse modulée est équivalente à un signal modulé ayant trois états de fréquence, un état central de fréquence égal à la fréquence de la porteuse lorsque ladite phase est stable dans les premiers intervalles,

2

et des premier et second états de fréquence respectivement lorsque la phase varie linéairement dans les seconds intervalles et ladite variable indiquant le sens de rotation de la phase est négative ou positive,

la différence entre l'état central et l'un des premier et second états de fréquence définissant une excursion de fréquence égale au quart de la fréquence du signal numérique entrant, et

des transitions de l'un des premier et second états de fréquence vers l'autre passant obligatoirement par l'état central de fréquence.

L'invention vise également à fournir un modulateur de phase du type à trois états de fréquence pour la mise en oeuvre du procédé.

Selon une première réalisation, un modulateur comprend des moyens recevant le signal numérique entrant pour coder, en fonction de ladite variable, le signal entrant en un signal ternaire ayant trois états (-1, 0, +1) correspondant respectivement aux trois états de fréquence, un oscillateur commandé en tension, un comparateur de phase ayant une entrée reliée à la sortie de l'oscillateur à travers un diviseur de fréquence par un entier A et une autre entrée recevant une fréquence $f_p$, et un additionneur additionnant un signal sortant du comparateur et le signal ternaire en un signal de commande en tension de l'oscillateur, ledit oscillateur produisant le signal modulé avec lesdits trois états de fréquence, l'état central de fréquence du signal modulé étant égal à $Af_p$.

Selon une seconde réalisation, un modulateur comprend des moyens recevant le signal numérique entrant avec un signal d'horloge ayant la fréquence du signal entrant pour coder, en fonction de ladite variable, le signal entrant en trois coefficients numériques correspondant respectivement aux trois états de fréquence, un multiplicateur de fréquence pour multiplier la fréquence du signal d'horloge par un entier prédéterminé en un signal de multiplication, et des moyens de division de fréquence programmables par les moyens pour coder pour diviser la fréquence du signal de multiplication respectivement par les coefficients numériques en ledit signal modulé avec lesdits trois états de fréquence.

Selon une troisième réalisation, un modulateur comprend des moyens recevant le signal numérique entrant avec un signal d'horloge ayant la fréquence du signal entrant pour coder, en fonction de ladite variable, le signal entrant en trois incréments numériques correspondant respectivement aux trois états de fréquence, une mémoire ayant mémorisé les échantillons numériques d'une période de sinusoïde, régulièrement répartis dans celle-ci et en nombre prédéterminé, des moyens pour produire une fréquence d'échantillonnage supérieure à et synchrone avec la fréquence F du signal d'horloge, des moyens d'addition d'adresse commandés par la fréquence d'échantillonnage pour produire des adresses de lecture d'échantillon appliquées à la mémoire et cumulées par addition de l'incrément fourni par les moyens pour coder en réponse à chaque période du signal d'échantillonnage, et des moyens pour convertir des échantillons lus dans la mémoire par les adresses cumulées en ledit signal modulé, lesdits trois états de fréquence du signal modulé étant respectivement avec les trois incréments dans un rapport constant égal au rapport de la fréquence d'échantillonnage et du nombre prédéterminé d'échantillons.

D'autres avantages et caractéristiques de l'invention apparaîtront plus clairement à la lecture de la description suivante de plusieurs réalisations préférées de l'invention en référence aux dessins annexés correspondants dans lesquels :

- la Fig. 1 est un diagramme de phase pour une modulation à deux états de phase selon l'invention ;
- les Figs. 2A, 2B et 2C montrent respectivement un signal numérique entrant, une variation de phase correspondante à enveloppe constante, et une variation de fréquence correspondante pour la modulation à deux états de phase ;
- la Fig. 3 montre les spectres de fréquence de deux signaux modulés selon des modulations à deux états de phase classique et selon l'invention, et représentés en traits interrompus courts et en trait plein, respectivement ;
- la Fig. 4 est un bloc-diagramme schématique d'un modulateur du type à trois états de fréquence et à oscillateur commandé en tension, pour la mise en oeuvre d'une modulation notamment à deux états de phase selon l'invention ;
- la Fig. 5 est un bloc-diagramme schématique d'un modulateur du type à trois états de fréquence et à diviseur de fréquence programmable, pour la mise en oeuvre d'une modulation notamment à deux états de phase selon l'invention ;
- la Fig. 6 est un bloc-diagramme schématique d'un modulateur du type à trois états de fréquence et à oscillateur numérique, pour la mise en oeuvre d'une modulation notamment à deux états de phase selon l'invention ;
- la Fig. 7 montre des échantillons équirépartis d'une période de sinusoïde mémorisés sous forme numérique dans une mémoire morte incluse dans l'oscillateur numérique du modulateur de la Fig. 6 ou 11 ;
- la Fig. 8 est un diagramme de phase pour une modulation à quatre états de phase $\pi/4$, $(3\pi/4, -5\pi/4)$, $(5\pi/4, -3\pi/4)$ et $(7\pi/4, -\pi/4)$ selon l'invention ;

- les Figs. 9A, 9B, 9C et 9D montrent respectivement deux signaux numériques à bits pairs et impairs issus d'un signal numérique entrant, une variation de phase correspondante à enveloppe constante, et une variation de fréquence correspondante pour la modulation à quatre états de phase selon la Fig. 8 ;
- la Fig. 10 montre les spectres de fréquence de deux signaux modulés selon des modulations à quatre états de phase classique et selon l'invention, et représentés en traits interrompus courts et en trait plein respectivement ;
- la Fig. 11 est un bloc-diagramme détaillé d'un modulateur du type à trois états de fréquence et à oscillateur numérique, analogue à celui de la Fig. 6, pour la mise en oeuvre d'une modulation à quatre états de phase selon l'invention ;
- la Fig. 12 est un diagramme de phase pour une modulation à quatre états de phase 0, $\pi/2$, $-\pi/2$ et $\pm\pi$, selon l'invention ;
- la Fig. 13 est un tableau de loi de codage pour la modulation à quatre états de phase selon la Fig. 12 ; et
- les Figs. 14A à 14E montrent respectivement deux signaux numériques à bits pairs et impairs issus d'un signal numérique entrant, un signal d'horloge synchrone avec lesdits deux signaux numériques, une variation de fréquence correspondante et une variation de phase correspondante à enveloppe constante pour la modulation à quatre états de phase définie par les Figs. 12 et 13 et mise en oeuvre dans le modulateur de la Fig. 11.

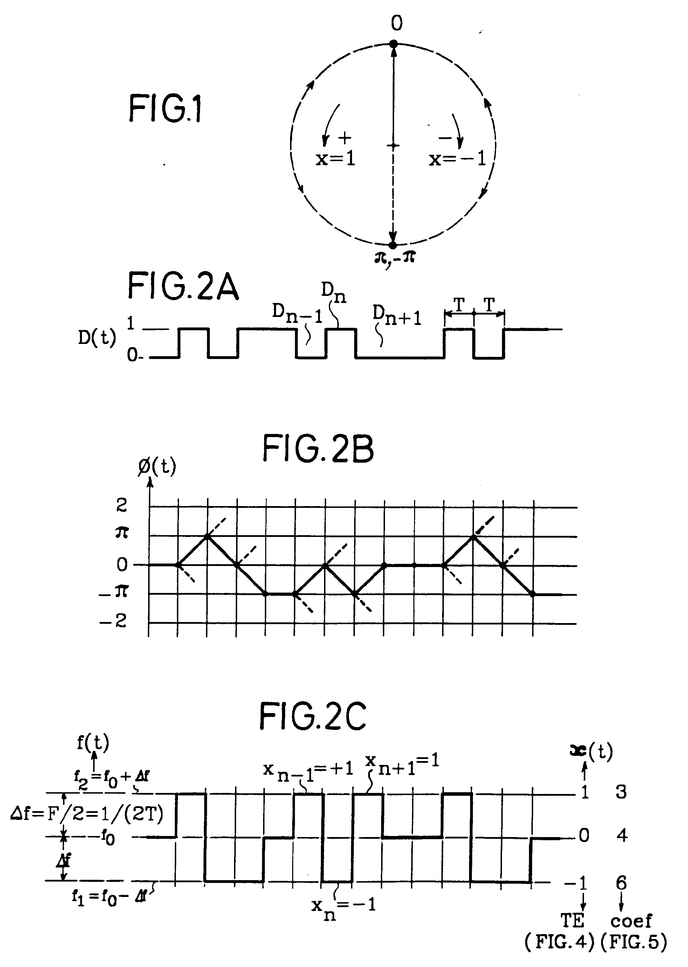

Selon une première réalisation du procédé selon l'invention, on se réfère à une modulation de phase à deux états stables 0 et $\pm\pi$ comme montré à la Fig. 1. Le saut de phase vers l'un ou l'autre des états stables s'effectue par variation linéaire de la phase d'une porteuse en réponse aux transitions d'un signal modulant numérique de données D(t). Le sens du saut de phase, positif ou négatif, par rapport à la phase de référence 0 est choisi d'une manière aléatoire en fonction d'une variable aléatoire bipolaire x ne transportant aucune information.

En référence aux Figs. 2A à 2C, soit s(t) un signal modulé ayant une amplitude normalisée :

$$s(t) = \exp[j(2\pi f_0 t + \phi(t))]$$

$f_0$ désigne la fréquence de la porteuse. $\phi(t)$ désigne la phase du signal modulé par un signal numérique de données $D_n(t)=\pm 1$ pour $n \le t \le (n+1)T$, où T est la période d'intervalle élémentaire du signal de données, et n est un entier désignant le rang de l'intervalle du signal de données compté à partir d'un intervalle de référence.

Selon l'invention, lorsque le début d'un intervalle du signal $D_n$, dit premier intervalle, n'est pas précédé d'une transition de "0" vers "1" ou de "1" vers "0", c'est-à-dire lorsque l'état binaire du signal de données dans l'intervalle élémentaire considéré est égal à celui de l'intervalle précédent, la phase de signal s(t) est stable et est égale à la phase du signal de s(t) à la fin de l'intervalle précédent, soit :

$$\phi_n(t) = \phi_{n-1}(nT) = 0 \text{ ou } \pm\pi \text{ pour } nT \le t \le (n+1)T.$$

Plus précisément, dans ce cas, la phase du signal s(t) est égale au produit de $D_n\pi$ par l'état d'une variable aléatoire bipolaire x au cours de la dernière période contenant une transition du signal de données, soit $\phi_n(t)=D_n.\pi.x_{n-k}$ avec $D_{n-k+1}=D_{n-k+2}=...D_n$.

Lorsque le début d'un intervalle élémentaire du signal $D_n$, dit second intervalle, offre une transition d'état binaire, la phase du signal s(t) varie linéairement à partir de la phase du signal s(t) à la fin de l'intervalle précédent, la pente de la variation linéaire étant fonction du signe $x_n$ de la variable aléatoire bipolaire de période T :

$$\phi_n(t) = \phi_{n-1}(nT) + x_n.\pi.(t-nT)/T, \text{ modulo } 2\pi, \text{ pour } nT \le t \le (n+1)T \text{ et } x_n=\pm 1.$$

Dans les Figs. 2B, des demi-droites en traits interrompus courts indiquent d'autres possibilités du sens de rotation de phase en fonction d'une variable x.

Les phase et fréquence instantanées du signal modulé s(t) sont :

$$\phi(t) = 2\pi f_0 t + \phi_n(t)$$

et

$$f(t) = (1/2\pi).d(2\pi f_0 t + \phi_n(t))/dt.$$

Pendant les premiers intervalles du signal s(t), la fréquence est constante et égale à la fréquence $f_0$ de la porteuse, soit : $f(t)=f_0$. Pendant une variation linéaire dans un second intervalle, la fréquence instantanée est constante et est égale à $f(t)= f_0+x_n/(2T)$, c'est-à-dire égale à une première fréquence $f_1=f_0-1/(2T)$ pour $x_n=-1$ ou à une seconde fréquence $f_2=f_0+1/(2T)$ pour $x_n=+1$. L'écart entre ces deux fréquences extrêmes est égal à la fréquence F=1/T du signal de données D, comme montré à la Fig. 2C. Le procédé de modulation selon l'invention est ainsi équivalent à une modulation à trois états de fréquence, c'est-à-dire à une modulation ayant une fréquence centrale égale à la fréquence $f_0$ de la porteuse et deux fréquences extrêmes $f_0\pm F/2$ situées de part et d'autre de la fréquence centrale et espacées de la fréquence $f_2-f_1=F$ du signal de données. L'excursion de fréquence est égale à $\Delta f=1/(2T)$, et l'indice de modulation est égal à 1.

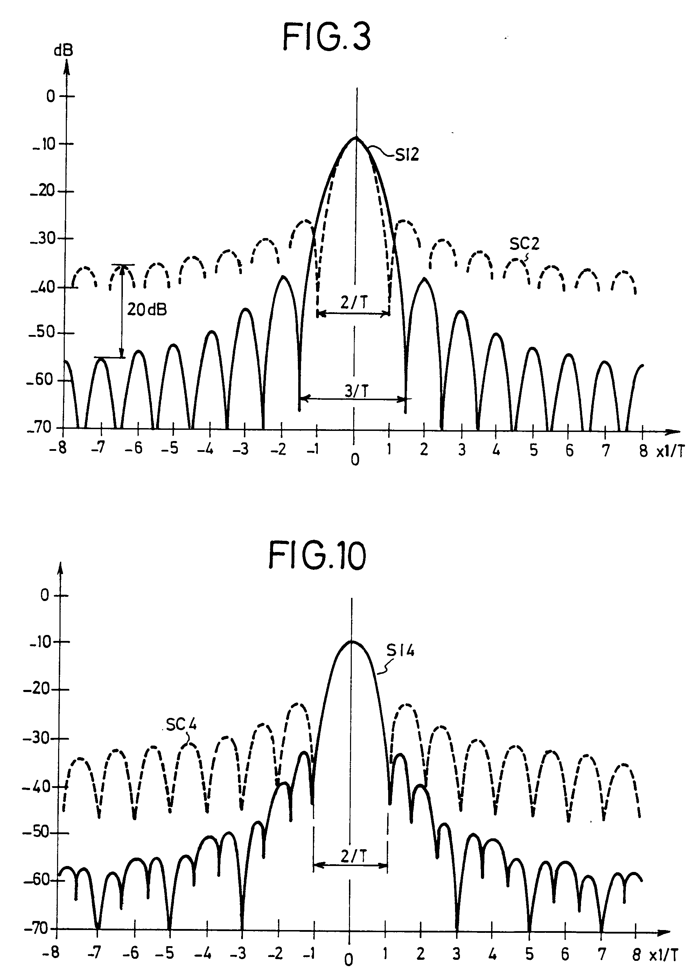

Comme montré à la Fig. 3, comparativement au spectre SC2 d'un signal modulé selon une modulation classique à deux états de phase stables, le spectre SI2 du signal s(t) modulé selon l'invention offre un lobe principal ayant une largeur égale à 3/T, soit 1,5 fois plus grande que la largeur 2/T du lobe principal du spectre SC2, et des lobes secondaires très rapidement atténués. Pour un écart de fréquence supérieur à 6/T, l'écart entre lobes secondaires des spectres SC2 et SI2 est supérieur à 20 dB.

De préférence un modulateur selon l'invention est réalisé sous la forme d'un modulateur de fréquence à trois états. Ce type de modulateur est choisi afin d'éviter les inconvénients des modulateurs de phase classiques à deux porteuses en quadrature ayant une structure analogique ou une structure numérique.

Pour réaliser l'invention avec un modulateur de type classique, la voie en phase du modulateur peut comprendre en entrée un codeur différentiel pour coder les transitions du signal de données en saut de phase, et la voie en quadrature du modulateur peut comprendre en entrée un circuit sélectionnant le sens de la variation de phase. Le sens aléatoire de la phase est par exemple obtenu par décorrélation d'au moins deux bits du signal de données entrant. Dans le modulateur de phase analogique classique, chacune des voies comprend un modulateur de phase équilibré succédant à un filtre passe-bas en bande de base et non linéaire dont la réalisation est particulièrement délicate. Dans le modulateur de phase numérique classique, il est nécessaire de prévoir une mémoire morte ROM ayant une capacité élevée pour mémoriser des échantillons des porteuses en phase et quadrature, et un convertisseur numérique-analogique.

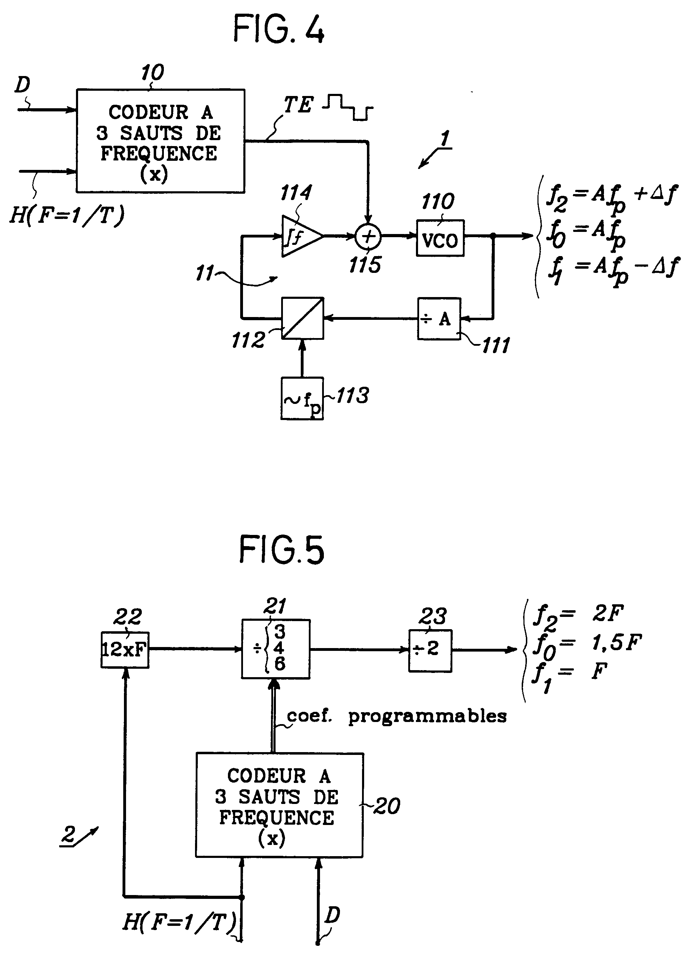

Trois modulateurs du type à modulation à deux états de phase obtenue par modulation à trois états de fréquence selon l'invention sont maintenant décrits en référence aux Figs. 4 à 6.

Selon une première réalisation montrée à la Fig. 4, un modulateur 1 comprend essentiellement un codeur de sauts de fréquence 10 et une boucle de phase 11 pour commander en tension un oscillateur VCO 110 offrant une bonne linéarité en fréquence. Le codeur 10 reçoit le signal de données D et un signal d'horloge H ayant la fréquence binaire F=1/T en synchronisme avec le signal D. En fonction d'une table de codage prédéterminée de la variable aléatoire x, le codeur 10 produit un signal ternaire TE dont les états "+1" et "-1" correspondent respectivement aux transitions du signal D et donc aux fréquences $f_1$ et $f_2$ et dont l'état "0" correspond aux états stables du signal D et donc à la fréquence centrale $f_0$, comme montré à la Fig. 2C. La boucle de phase 11 comprend, outre l'oscillateur 110, un comparateur de phase 112 ayant une première entrée qui est reliée à la sortie de l'oscillateur VCO 110 à travers un diviseur de fréquence par A, 111, et une seconde entrée qui est reliée à un oscillateur stable 113 ayant une fréquence prédéterminée $f_p$, et un additionneur 115 ayant une première entrée qui est reliée à la sortie du comparateur 112 à travers un filtre passe-bas 114 et une seconde entrée qui est reliée à la sortie du codeur 10. Une sortie de l'additionneur 115 est reliée à une entrée de commande en tension de l'oscillateur 110 afin que l'oscillateur 110 produise un signal modulé ayant la fréquence de porteuse $f_0=Af_p$ pendant l'état "0" du signal ternaire TE et deux fréquences $f_1=Af_p-\Delta f$ et $f_2=Af_p+\Delta f$ pendant les états bipolaires ±1 du signal TE.

Selon une seconde réalisation montrée à la Fig. 5, un modulateur 2 met en oeuvre un diviseur de fréquence programmable synchrone 21 pour produire trois fréquences désirées 2F, 3F et 4F. Le modulateur 2 comprend un codeur de sauts de fréquence 20 analogue au codeur 10 et recevant le signal de données D et le signal d'horloge correspondant H pour produire trois mots codés de coefficient correspondant respectivement aux trois fréquences désirées, et un multiplicateur de fréquence 22 qui multiplie la fréquence F du signal H par le nombre 12 qui est égal au plus petit multiple commun des coefficients programmables 6, 4 et 3 du diviseur 21. Le diviseur 21 reçoit le signal de fréquence 12F du multiplicateur 22 et est programmé par le codeur 20 en fonction des états du signal entrant D et de la variable x. Les coefficients 6, 4 et 3 correspondent respectivement aux états de fréquence $f_1$, $f_0$ et $f_2$ montrés à la Fig. 2C. Le diviseur 21 fournit la fréquence 2F ou 4F en réponse au coefficient 6 ou 3 pour chaque transition du signal de données D, et fournit la fréquence 3F pour chaque état stable du signal D en réponse au coefficient 4.

La continuité de phase aux transitions est assurée par un diviseur de fréquence par deux 23 qui est relié en sortie du diviseur programmable 21. Le diviseur 23 produit un signal modulé ayant une fréquence centrale de porteuse $f_0$ égale à 1,5 F, très proche de la fréquence d'horloge F du signal de données, et deux fréquences extrêmes $f_1=F$ et $f_2=2F$. Dans ce cas, le spectre du signal modulé est replié autour de la fréquence nulle et de l'harmonique 2 de la fréquence 1,5 F. Ce repliement conduit à un rapport signal à bruit de 30 dB dans la bande de Nyquist ce qui est compatible avec une modulation biphase.

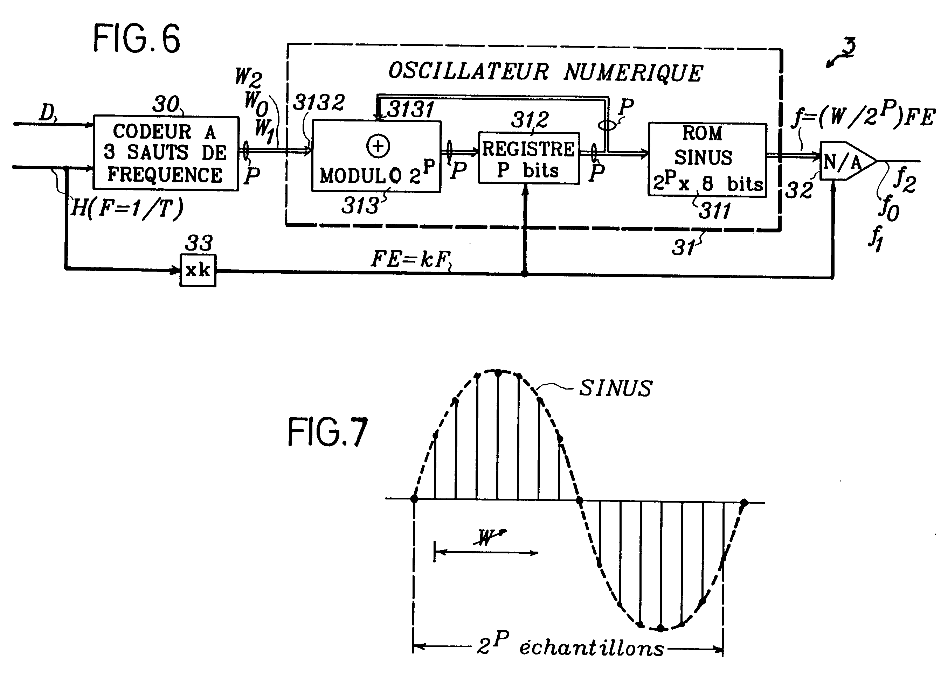

Selon une troisième réalisation montrée à la Fig. 6, un modulateur 3 est réalisé entièrement sous forme numérique. En d'autres termes, les moyens analogiques 11 selon la Fig. 4 et les moyens analogiques 21 et 23 selon la Fig. 5 pour produire la fréquence porteuse $f_0$ et les deux fréquences extrêmes $f_1$ et $f_2$ sont remplacés par un oscillateur numérique 31 produisant des échantillons numériques qui en sortie du modulateur 3 sont convertis en le signal modulé par un convertisseur numérique-analogique 32. Le modulateur 3 comprend également un codeur à trois sauts de fréquence 30 qui joue un rôle analogue aux codeurs 10 et 20 et qui reçoit les signaux D et H, et un circuit de multiplication de fréquence 33 qui multiplie la fréquence F du signal d'horloge H par un entier prédéterminé k en une fréquence d'échantillonnage FE=kF appliquée à des entrées d'horloge de l'oscillateur 31 et du convertisseur 32.

Dans l'oscillateur numérique 31 est prévue une mémoire ROM 311 ayant stocké des octets représentatifs d'échantillons qui sont régulièrement répartis dans une période d'une sinusoïde SINUS montrée à la Fig. 7. Le nombre d'octets d'échantillon est de préférence égal à $2^P$, où P est un entier. La mémoire 311 est adressée sélectivement en lecture par un accumulateur d'adresses qui comprend un registre tampon d'adresse 312 ayant P étages parallèles à 1 bit, et un additionneur d'adresse modulo-$2^P$ 313. Une sortie à P fils du registre 312 est reliée à des entrées d'adresse de lecture de la mémoire morte 311 et à des premières entrées 3131 de l'additionneur 313. Des secondes entrées 3132 de l'additionneur reçoivent un mot binaire W du codeur 30. Les entrées parallèles des étages du registre 312 sont reliées à P sorties de l'additionneur 313.

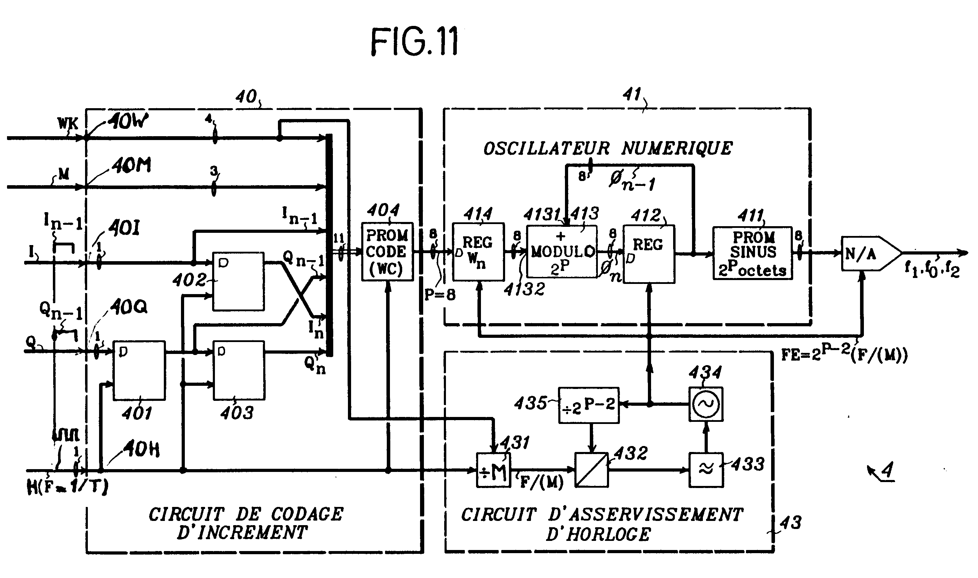

Le mot W est choisi dans le codeur 30 en fonction des transitions et des états stables du signal de données D et donc peut avoir trois valeurs $W_0$, $W_1$ et $W_2$ respectivement associées aux trois fréquences à générer $f_0$, $f_1$ et $f_2$. Ce mot W est additionné à l'adresse sortant du registre 312 à chaque période d'échantillonnage 1/FE, et par suite définit le pas d'incrémentation des adresses des échantillons lues dans la mémoire 311. La fréquence de l'onde lue dans la mémoire 311 est alors égale à $f=(W/2^P)FE$. Ainsi chaque saut de fréquence est obtenu par modification de la valeur de l'incrément W. Le respect de l'indice de modulation est assuré par la synchronisation de l'horloge de lecture FE appliquée au registre 312, avec l'horloge de rythme H du signal entrant, à travers le circuit de multiplication 33, comme on le verra dans la suite en référence à la Fig. 11.

Les trois fréquences à produire sont les suivantes :

$$f_0 = (W_0/2^P).(kF), \quad f_1 = (W_1/2^P).(kF) \quad \text{et} \quad f_2 = (W_2/N).(kF)$$

où $f_0$ est la fréquence centrale entre les fréquences $f_1$ et $f_2$, qui présentent un écart égal à $F=1/T$ selon la Fig. 2C, soit :

$$(f_2 - f_1)/2 = f_2 - f_0 = f_0 - f_1 = F/2,$$

d'où

$$(W_2 - W_1)/2 = W_2 - W_0 = W_0 - W_1 = 2^P/(2k).$$

De préférence, pour limiter la modulation d'amplitude résiduelle en sortie du modulateur, on pose $W_2 \leqq N/4$.

Par exemple pour des valeurs P=6 et $2^P$=64, et k=32, et un signal d'entrée D à 2 Mbit/s, soit F=2 MHz, les valeurs suivantes sont obtenues pour $W_2 = 2^P/4$ :

$$2^P/2k = 1$$
$$W_0 = 15 \qquad f_0 = 7,5 \ F = 15 \ \text{MHz}$$
$$W_1 = 14 \qquad f_1 = 7 \ F = 14 \ \text{MHz}$$
$$W_2 = 16 \qquad f_2 = 8 \ F = 16 \ \text{MHz}$$

et FE = kF = 64 MHz.

Le modulateur 3 selon la Fig. 6 peut produire avantageusement des fréquences de porteuse $f_0$ plus élevées que celles produites par le modulateur à comptage de fréquence 2 montré à la Fig. 5.

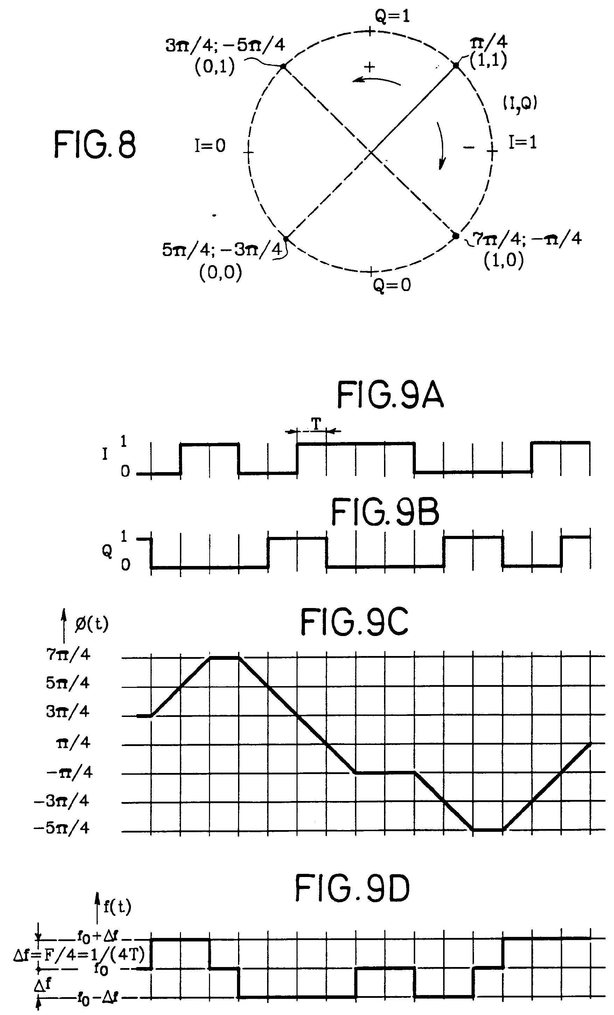

On se réfère maintenant à une seconde réalisation de procédé selon l'invention qui est relative à une modulation à quatre états de phase. Le principe de cette modulation est analogue à celui de la modulation à deux états de phase selon l'invention, aux différences près suivantes, comme cela apparaît dans les Figs. 8 et 9A à 9D. Dans ces figures, le signal de données D est sous la forme de deux signaux numériques I et Q comprenant respectivement les bits de rangs pairs et impairs du signal D et correspondant aux voies en phase et en quadrature dans un modulateur à quatre états de phase classique, et la phase varie dans une enveloppe constante entre les limites $7\pi/4$ et $-5\pi/4$, $\pi/4$ étant la référence de phase de part et d'autre de laquelle le sens de la phase change.

Pour la modulation de phase à quatre états selon l'invention, les sauts de phase ont une amplitude de $\pm\pi/2$ ce qui correspond à une excursion d'une modulation de fréquence à trois états égale à $\Delta f=f_2-f_0=f_0-f_1=1/4T$, où 2T est la période des signaux I et Q, et à un indice de modulation égal à 0,5. Toutefois les sauts de phase égaux à $\pi$ sont interdits, ce qui implique que quatre groupes déterminés de quatre bits consécutifs dans le signal entrant sont écartés, comme on le verra plus loin. Ces sauts égaux à $\pi$ étant interdits, les transitions de l'une des fréquences $f_1$ et $f_2$ vers l'autre s'effectuent obligatoirement par un état stable intermédiaire à la fréquence $f_0$, comme montré aux Figs. 9C et 9D. Le passage intermédiaire à la fréquence $f_0$ limite l'amplitude des transitions et les composantes à haute fréquence du spectre du signal modulé sortant. Comme montré à la Fig. 10, des lobes secondaires du spectre SI4 du signal modulé selon l'invention sont atténués de plus de 20 dB par rapport à ceux du spectre SC4 d'un signal modulé classiquement.

Un modulateur à quatre états de phase selon l'invention, du type à trois états de fréquence, peut avoir une structure analogue aux modulateurs montrés aux Figs. 4 et 5, aux différences près que le codeur 10, 20 reçoit ou établit les deux signaux numériques I et Q en parallèle, et un signal d'horloge h ayant une fréquence F/2=1/(2T). Dans le modulateur 1 à oscillateur VCO 110, la fréquence du signal ternaire est alors égale à F/2 ; de même dans le modulateur 2 à diviseur de fréquence programmable 21, la fréquence de changement des coefficients est alors égale à F/2.

Un modulateur à oscillateur numérique 4 du type à quatre états de phase selon l'invention offre une structure analogue à celle montrée à la Fig. 6, et est maintenant décrit en détail en référence à la Fig. 11.

Le modulateur 4 comprend, en entrée, un circuit de codage d'incrément 40, puis un oscillateur numérique 41 pour produire des mots d'échantillon numérique du signal modulé, et en sortie un convertisseur numérique-analogique 42 fournissant un signal modulé analogique à amplitude constante et à trois fréquences $f_1$, $f_0$, $f_2$, ainsi qu'un circuit d'asservissement d'horloge 43 pour produire la fréquence d'échantillonnage FE.

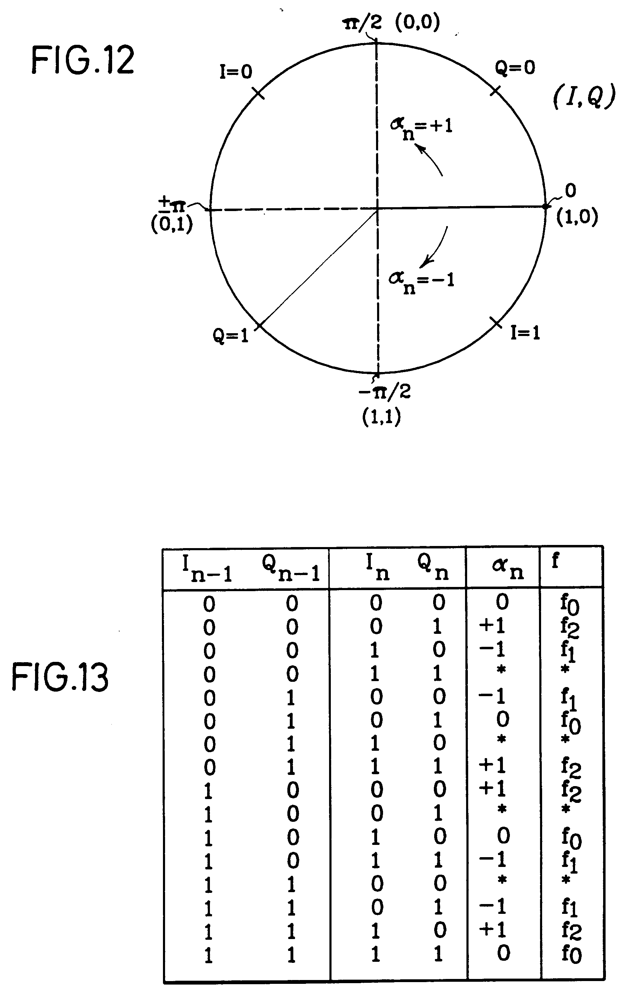

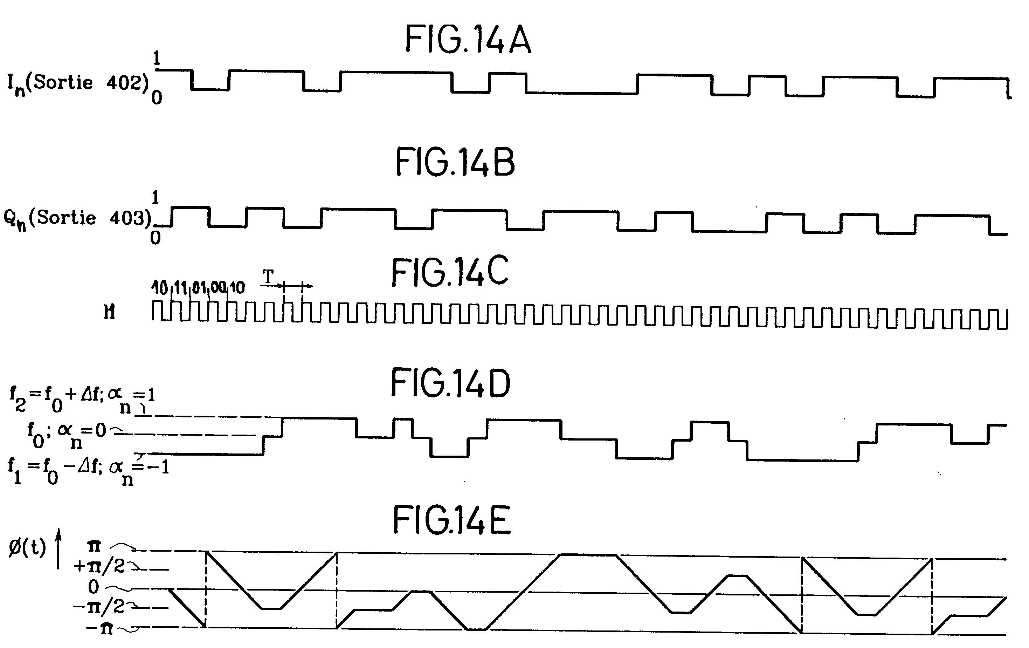

Les caractéristiques d'un codage à sauts de fréquence de $\pm\pi/2$, c'est-à-dire les phases associées aux quatre couples possibles de bits ($I_n$, $Q_n$) et par suite les sens de rotation de phase, sont fixées arbitrairement, et sont montrées selon un exemple préféré aux Figs. 12 et 13. Selon cet exemple, la phase de référence est égale à 0 et correspond à un couple de bits simultanés des signaux I et Q, tels que ($I_n$, $Q_n$)=(1,0). Les trois autres états de phase sont $\pi/2$, $+\pi$ et $-\pi/2$ et correspondent aux couples ($I_n$, $Q_n$) égaux à (0,0), (0,1) et (1, 1). L'indice n est un entier quelconque compté à partir d'une période de référence des deux signaux synchrones I et Q. Lorsque le couple ($I_n$, $Q_n$) est égal au couple précédent ($I_{n-1}$, $Q_{n-1}$), la phase est constante ce qui se traduit par un paramètre de codage $\alpha_n$ égal à 0. Le paramètre de codage $\alpha_n$ est équivalent à la variable x pour la modulation à deux états, et indique le sens de rotation de la phase pour chacune des transitions possibles ($I_{n-1}$, $Q_{n-1}$ ; $I_n$, $Q_n$) au début de la période T/2 d'indice n des signaux I et Q. Ainsi, pour quatre sauts de phase positifs, selon le sens des aiguilles d'une montre dans la Fig. 12, et correspondant respectivement aux transitions (1,0 ; 0,0), (0,0 ; 0,1), (0,1 ; 1,1) et (1,1 ; 1,0), le paramètre $\alpha_n$ est égal à +1 et la phase avance progressivement. Inversement, pour les quatre sauts de phase négatifs, selon le sens contraire à celui des aiguilles d'une montre dans la Fig. 11, et correspondant respectivement aux transitions (1,0 ; 1,1), (1,1 ; 0,1), (0,1 ; 0,0) et (0,0 ; 1,0), le paramètre $\alpha_n$ est égal à -1 et la phase retarde progressivement. Comme déjà dit ci-avant, les sauts de phase égaux à $\pi$ sont interdits, et par suite les quatre transitions ($I_{n-1}$, $Q_{n-1}$ ; $I_n = \overline{I_{n-1}}$, $Q_n = \overline{Q_{n-1}}$) pour lesquelles le couple de bits $I_n$, $Q_n$ est égal au complément logique du couple précédent, sont éliminées dans les signaux de données I et Q et remplacées chacune par deux sauts de phase successifs de $\pi/2$, ou $-\pi/2$, pendant deux périodes successives de durée T.. Cette inexistence est signalée par un astérique dans la Fig. 13. Les Figs. 14A à 14E montrent la variation de phase (Fig. 14E) entre $\pi$ et $-\pi$ à enveloppe constante, et les sauts de fréquence correspondants (Fig. 14D) pour deux signaux de données synchrones I et Q (Figs. 14A et 14B) synchrones avec un signal d'horloge H (Fig. 14C) ayant la fréquence F=1/T. F désigne la fréquence du signal de données entrant D à partir duquel les signaux I et Q à bits de rangs pairs et impairs respectivement sont séparés dans un séparateur classique précédant le modulateur 4.

En se référant à nouveau à la Fig. 11, le circuit de codage 40 comprend à titre d'exemple trois bascules bistables du type D 401, 402 et 403 et une mémoire PROM de code 404. Le circuit de codage pourrait également être réalisé par des moyens logiques combinatoires.

Les bascules 401 à 403 décalent convenablement les signaux entrants I et Q afin d'appliquer simultanément en parallèle, à chaque période T, des bits $I_{n-1}$, $Q_{n-1}$, $I_n$ et $Q_n$ à des entrées d'adresses de la mémoire morte 404. Le signal d'horloge H ayant la période T est appliqué via une borne 40H du modulateur 4 à des entrées d'horloge des trois bascules et de la mémoire 404 ainsi qu'à une entrée d'un diviseur programmable de fréquence par un paramètre M, 431, inclus dans le circuit 43. Les signaux I et Q sont appliqués à des bornes 40I et 40Q du modulateur 4 en synchronisme avec des fronts descendants du signal H, et les bascules 401 à 403 peuvent changer d'état en réponse aux fronts montants du signal H. L'entrée D de la première bascule 401 est relié à la borne 40Q et retarde de T/2 le signal Q. La sortie directe de la bascule 401 est reliée à l'entrée D de la bascule 403, et l'entrée 40I du modulateur 4 recevant le signal I est reliée à l'entrée D de la seconde bascule 402. Les seconde et troisième bascules 402 et 403 retardent de T le signal I et le signal Q retardé de T/2 par la bascule 401 et délivrent ainsi deux bits simultanés $I_n$ et $Q_n$ de largeur T (Figs. 14A et 14B) en synchronisme avec deux bits simultanés précédant $I_{n-1}$ et $Q_{n-1}$ qui sont délivrés par l'entrée 40I et la sortie directe de la bascule 401. Les quatre bits simultanés $I_{n-1}$, $Q_{n-1}$, $I_n$ et $Q_n$ ainsi qu'un mot à 4 bits parallèles représentatif d'un paramètre W et reçu par des entrées 40W du modulateur 4 et un mot à 3 bits parallèles représentatif du paramètre M et reçu par des entrées 40M du modulateur 4 sont appliqués à des entrées d'adresses de la mémoire 404 via un bus à 11 fils.

L'oscillateur numérique 41 comprend, comme l'oscillateur 31 représenté schématiquement à la Fig. 6, un additionneur numérique modulo-$2^P$ de mots à P bits 413, un registre tampon d'adresse 412 à P étages parallèles, et une mémoire PROM 411 ayant mémorisé $2^P$ échantillons d'une sinusoïde SINUS (Fig. 7), ainsi qu'un

7

registre de lecture 414 à P étages parallèles. Les entrées d'horloge des étages des registres 414 et 412 et du convertisseur numérique-analogique 42 reçoivent le signal à la fréquence d'échantillonnage FE fourni par la sortie du circuit 43. Le registre 414 reçoit, via P sorties de la mémoire de code 404, un mot d'incrément $W_n$ correspondant à la paire de couples de bits $(I_{n-1}, Q_{n-1}, I_n, Q_n)$ et lu dans la mémoire 404 en réponse à chaque période T du signal d'horloge H, et applique le mot $W_n$ à P secondes entrées 4132 de l'additionneur 413 en réponse à une période du signal d'échantillonnage FE. P premières entrées 4131 de l'additionneur 413 sont bouclées à P sorties de celui-ci à travers le registre 412.

Le mot $W_n$ représente l'incrément d'accumulation du couple de bits $(I_n, Q_n)$ de rang n. Si $\phi_n$ désigne le mot accumulé en sortie de l'additionneur 413, la phase instantanée du signal modulé est définie par l'équation suivante :

$$\phi_n = \sum_{i=0}^{i=n} W_i = \phi_{n-1} + W_n$$

Pendant la période T de rang n dans le signal d'horloge H, $2^P/W_n$ échantillons de la sinusoïde (Fig. 7) ayant des adresses consécutives différentes de $W_n$ sont lus au rythme de la fréquence d'échantillonnage FE. Des échantillons numériques d'une fréquence $(W_n/2^P)FE$ lues dans la mémoire 411 sont ainsi convertis par le convertisseur 42.

De ce qui précède, la loi de codage pour une modulation à quatre états de phase est la suivante :

$$W_n = (WC + WK) + M.\alpha_n(I_{n-1}, Q_{n-1}, I_n, Q_n)$$

où WC, WK et M sont des paramètres caractéristiques de la modulation à trois fréquences.

La somme de paramètres WC+WK est directement proportionnelle au rapport $f_0/FE$ entre la fréquence centrale intermédiaire $f_0$ du signal modulé et la fréquence d'échantillonnage FE et est choisie en fonction de la qualité du signal modulé à produire, notamment de son spectre. Selon la réalisation illustrée, WC est constant et mémorisé dans la mémoire de code 404, et indique la limite inférieure de l'incrément moyen $W_n$ ; l'autre paramètre WK est sélectionné par l'utilisateur grâce à sa transmission sous forme d'un mot à 4 bits via l'entrée 40W de la mémoire 404 ; le paramètre WK peut ainsi varier entre 0 et 15.

Le troisième paramètre M détermine l'indice de modulation et est appliqué sous la forme d'un mot à 3 bits, via l'entrée 40M de la mémoire 404.

La fréquence du signal sortant du convertisseur 42 est donnée par la relation :

$$f_n = (W_n/2^P)FE,$$

soit

$$f_n = (WC + WK)(FE/2^P) + (M.FE/2^P)\alpha_n$$

En posant

$$f_n = f_0 + \alpha_n \Delta f$$

sont déduites les valeurs des trois fréquences $f_0$, $f_1$ et $f_2$ respectivement pour $\alpha_n=0,-1$ et $+1$ :

$$f_0 = (WC + WK)(FE/2^P)$$
$$f_1 = f_0 - \Delta f$$
$$f_2 = f_0 + \Delta f$$

avec l'excursion de fréquence :

$$\Delta f = (M.FE)/2^P$$

L'indice de modulation $\beta$ étant fixé à 0,5, on en déduit de

$$\beta = 2\Delta f/(F) = 2(M.FE)/(2^P.F) = 1/2$$

la relation liant la fréquence de rythme F du signal entrant modulant et la fréquence d'échantillonnage FE :

$$FE = 2^{P-2}(F/M)$$

La valeur de l'indice de modulation est parfaitement respectée en asservissant la fréquence d'échantillonnage sur l'horloge H du signal numérique. En effet, une erreur sur l'indice de modulation se traduit par une erreur sur l'amplitude des sauts de phase $\pm\pi/2$ et donc par une interférence intersymbole d'autant plus accentuée que l'erreur d'indice de modulation est élevée.

Compte tenu de ce qui précède, le circuit d'asservissement d'horloge 43 comprend, outre le diviseur 431, une boucle de phase classique incluant un comparateur de phase 632, un filtre passe-bas 433, un oscillateur VCO 434 à la fréquence FE, et un diviseur de fréquence par $2^{P-2}$, 435. Le diviseur de fréquence par M, 431, est un diviseur programmable par le mot appliqué à l'entrée 40M du modulateur 4. Les deux entrées du comparateur 432 sont reliées respectivement aux sorties des diviseurs de fréquence 431 et 435. Une entrée de commande en tension de l'oscillateur 434 est reliée à la sortie du comparateur 432 à travers le filtre 433. La sortie de l'oscillateur 434 est reliée à l'entrée du diviseur 435 et délivre la fréquence d'échantillonnage $FE=2^{P-2}(F/M)$.

Afin de fixer les idées, le tableau I suivant indique les caractéristiques de deux modulations à trois fréquences selon l'invention pour des signaux entrants respectifs ayant des débits de 2,520696 Mbit/s et 5,0553 Mbit/s et pour une valeur de l'entier P égale à 8, soit une mémoire de sinusoïde 411 contenant $2^8=256$ octets d'échantillons, et une mémoire de code 404 ayant une capacité de 2 koctets.

TABLEAU I

| Débit | $\cong$ 2 Mbit/s | $\cong$ 4 Mbit/s |
|---|---|---|
| F du signal D | 2,520616 Mbit/s | 5,0553 Mbit/s |
| F/2 du signal I ou Q | 1,260308 Mbit/s | 2,52765 Mbit/s |
| M | 4 | 8 |
| WC dans mémoire 404 | 64 | 64 |
| WK | 0 | 0 |
| FE=64F/M | 40,329856 MHz | 40,44240 MHz |
| $f_0=(64/256)FE$ | 10,082464 MHz | 10,1106 MHz |
| $\beta$ | 0,5 | 0,5 |

Le rapport $FE/f_0$ égal à 4 permet d'assurer une bonne restitution des premiers lobes secondaires dans le spectre du signal modulé.

## Revendications

1. Procédé pour moduler la phase d'une porteuse ayant une fréquence prédéterminée ($f_0$) en fonction d'un signal numérique entrant ayant une fréquence binaire prédéterminée (F) en une porteuse modulée ayant des états de phase équirépartis, caractérisé en ce que la porteuse modulée comprend des premiers intervalles où la phase est stable et égale à l'état de phase à la fin de l'intervalle précédent en réponse à un état binaire dans un intervalle élémentaire du signal numérique égal à celui dans l'intervalle précédent, et des seconds intervalles où la phase varie linéairement entre deux états de phase consécutifs en réponse à un intervalle du signal numérique débutant par une transition binaire, le sens de rotation de la phase au début d'un second intervalle étant déterminé en fonction d'une variable (x, $\alpha$).

2. Procédé à deux états de phase (0, $\pm\pi$) conforme à la revendication 1, caractérisé en ce que la porteuse modulée est équivalente à un signal modulé ayant trois états de fréquence, un état central de fréquence égal à la fréquence ($f_0$) de la porteuse lorsque ladite phase est stable dans lesdits premiers intervalles, et des premier et second états de fréquence ($f_1$, $f_2$) respectivement lorsque la phase varie linéairement dans lesdits seconds intervalles et ladite variable (x) indiquant le sens de rotation de phase est négative ou positive, la différence entre l'état central ($f_0$) et l'un des premiers et second états de fréquence ($f_1$, $f_2$) définissant une excursion de fréquence ($\Delta f$) égale à la moitié (F/2) de la fréquence du signal numérique entrant.

3. Procédé à quatre états de phase (0, + $\pi/2$, +$\pi$, -$\pi/2$) conforme à la revendication 1, caractérisé en ce que
   le signal numérique entrant (D) est composé de deux signaux numérique parallèles (I, Q) ayant respectivement des bits pairs et impairs du signal numérique entrant et incluant quatre couples de bits parallèles pair et impair respectivement associés aux quatre états de phase, un couple étant transmis dans un intervalle, et
   la porteuse modulée est équivalente à un signal modulé ayant trois états de fréquence, un état central de fréquence égal à la fréquence ($f_0$) de la porteuse lorsque ladite phase est stable dans lesdits premiers intervalles, et des premier et second états de fréquence ($f_1$, $f_2$) respectivement lorsque la phase varie linéairement dans lesdits seconds intervalles et ladite variable ($\alpha$) indiquant le sens de rotation de la phase

9

est négative ou positive,

la différence entre l'état central ($f_0$) et l'un des premier et seconds états de fréquence ($f_1$, $f_2$) définissant une excursion de fréquence ($\Delta f$) égale au quart (F/4) de la fréquence du signal numérique entrant, et

des transitions de l'un des premier et second états de fréquence ($f_1$, $f_2$) vers l'autre passant obligatoirement par l'état central de fréquence ($f_0$).

4. Procédé conforme à la revendication 3, caractérisé en ce que les signaux numériques parallèles (I, Q) ne comprennent pas quatre transitions de deux couples consécutifs de bits correspondant à des sauts de phase ayant une amplitude de $\pm\pi$.

5. Modulateur de phase (1) pour la mise en oeuvre du procédé conforme à l'une quelconque des revendications 2 à 4, caractérisé en ce qu'il comprend des moyens (10) recevant le signal numérique entrant (D) pour coder, en fonction de ladite variable (x), le signal entrant (D) en un signal ternaire (TE) ayant trois états (-1, 0, +1) correspondant respectivement aux trois états de fréquence ($f_1$, $f_0$, $f_2$), un oscillateur commandé en tension (110), un comparateur de phase (112) ayant une entrée reliée à la sortie de l'oscillateur (110) à travers un diviseur de fréquence par un entier A et une autre entrée recevant une fréquence $f_p$, et un additionneur (115) additionnant un signal sortant du comparateur et le signal ternaire (TE) en un signal de commande en tension de l'oscillateur, ledit oscillateur produisant le signal modulé avec lesdits trois états de fréquence ($f_1$, $f_0$, $f_2$), l'état central de fréquence ($f_0$) du signal modulé étant égal à $Af_p$.

6. Modulateur de phase (2) pour la mise en oeuvre du procédé conforme à l'une quelconque des revendications 2 à 4, caractérisé en ce qu'il comprend des moyens (20) recevant le signal numérique entrant (D) avec un signal d'horloge (H) ayant la fréquence (F) du signal entrant pour coder, en fonction de ladite variable (x), le signal entrant (D) en trois coefficients numériques ("6", "4" "3") correspondant respectivement aux trois états de fréquence ($f_1$, $f_0$, $f_2$), un multiplicateur de fréquence (22) pour multiplier la fréquence (F) du signal d'horloge (H) par un entier prédéterminé, en un signal de multiplication (12F), et des moyens de division de fréquence (21, 23) programmables par les moyens pour coder (20) pour diviser la fréquence du signal de multiplication (12F) respectivement par les coefficients numériques ("6", "4", "3") en le signal modulé avec lesdits trois états de fréquence ($f_1$, $f_0$, $f_2$).

7. Modulateur conforme à la revendication 6, caractérisé en ce que l'entier prédéterminé ("12") est égal au plus petit commun multiple des trois coefficients ("6", "4", "3").

8. Modulateur de phase (3, 4) pour la mise en oeuvre du procédé conforme à l'une quelconque des revendications 2 à 4, caractérisé en ce qu'il comprend des moyens (30, 40) recevant le signal numérique entrant (D) avec un signal d'horloge (H) ayant la fréquence (F) du signal entrant pour coder, en fonction de ladite variable (x, $\alpha$), le signal entrant (D) en trois incréments numériques ($W_1$, $W_0$, $W_2$) correspondant respectivement aux trois états de fréquence ($f_1$, $f_0$, $f_2$), une mémoire (311, 411) ayant mémorisé les échantillons numériques d'une période de sinusoïde (SINUS), régulièrement répartis dans celle-ci et en nombre prédéterminé ($2^P$), des moyens (33, 43) pour produire une fréquence d'échantillonnage (FE) supérieure à et synchrone avec la fréquence F du signal d'horloge (H), des moyens d'addition d'adresse (312, 313 ; 412, 413) commandés par la fréquence d'échantillonnage (FE) pour produire des adresses de lecture d'échantillon appliquées à la mémoire (311, 411) et cumulées par addition de l'incrément ($W_1$ ou $W_0$, ou $W_2$) fourni par les moyens pour coder (30, 40) en réponse à chaque période du signal d'échantillonnage, et des moyens (32, 42) pour convertir des échantillons lus dans la mémoire (311, 411) par les adresses cumulées en ledit signal modulé, lesdits trois états de fréquence ($f_1$, $f_0$, $f_2$) du signal modulé étant respectivement avec les trois incréments respectifs ($W_1$, $W_0$, $W_2$) dans un rapport constant égal au rapport de la fréquence d'échantillonnage (FE) et du nombre prédéterminé d'échantillons ($2^P$).

9. Modulateur conforme à la revendication 8, caractérisé en ce que la mémoire (311, 411) comprend $2^P$ échantillons numériques, et en ce que les moyens d'addition comprennent, en outre, un registre d'adresses (312, 412) ayant P étages parallèles dont les sorties sont reliées à des entrées d'adresse de lecture de la mémoire et qui sont commandés par la fréquence d'échantillonnage (FE), et un additionneur d'adresse modulo-$2^P$ ayant des premières entrées (3131, 4131) reliées aux sorties du registre (312 412), des secondes entrées reliées à des sorties des moyens pour coder (30, 40) fournissant un incrément numérique ($W_1$, $W_0$, $W_2$), et des sorties reliées aux entrées des étages du registre.

10. Modulateur conforme à la revendication 8 ou 9, caractérisé en ce que les moyens pour produire la fréquence d'échantillonnage (43) comprennent un diviseur de fréquence (431) pour diviser la fréquence du signal d'horloge (F ou F/2) par un facteur (M) proportionnel à un indice de la modulation de fréquence ($\beta$), et une boucle d'asservissement d'horloge (432 à 435) reliée à la sortie du diviseur de fréquence (431) pour produire la fréquence d'échantillonnage.

11. Modulateur conforme aux revendications 9 et 10, caractérisé en ce que la boucle d'asservissement comprend un diviseur de fréquence (33 ; 435) par $2^{P-x}$, où x est un entier supérieur ou égal à 1 ou 2.

12. Modulateur conforme à l'une quelconque des revendications 8 à 11 pour la mise en oeuvre du procédé conforme à la revendication 3 ou 4, caractérisé en ce que les moyens pour coder comprennent en entrée des moyens (401, 402, 403) recevant lesdits deux signaux numériques ayant respectivement des bits pairs et impairs (I, Q) pour produire simultanément deux couples consécutifs de bits pair et impair ($I_{n-1}$, $Q_{n-1}$ ; $I_n$, $Q_n$) et des moyens (404) ayant mémorisé la valeur de la variable ($\alpha$=0) indiquant un état de phase stable pour chaque combinaison de couples égaux et deux états opposés de la variable ($\alpha$=+1) pour chacune des combinaisons de couples différents correspondant à un saut de phase de $\pm\pi/2$ afin de produire les incréments numériques ($W_0$, $W_1$, $W_2$) correspondant auxdites combinaisons de couples.

13. Modulateur conforme à la revendication 12, caractérisé en ce que les moyens pour produire simultanément deux couples consécutifs comprennent une première bascule (401) recevant l'un (Q) des deux signaux numériques parallèles (I, Q), une seconde bascule (402) recevant l'autre signal numérique (I), et une troisième bascule (401) reliée à la sortie de la première bascule (401), lesdites bascules étant commandées par un signal d'horloge (h) à la moitié (F/2) de la fréquence du signal entrant (D), et l'entrée de ladite seconde bascule (402) et les sorties des trois bascules (401, 402, 403) étant reliées à des entrées d'adresse de lecture des moyens (404) ayant mémorisé les valeurs de la variable ($\alpha$).

**Patentansprüche**

1. Verfahren zur Phasenmodulation eines Trägers mit einer vorgegebenen Frequenz ($f_0$) als Funktion eines eintreffenden digitalen Signals mit einer vorgegebenen binären Frequenz (F) in einen modulierten Träger mit gleichverteilten Phasenzuständen, dadurch gekennzeichnet, daß der modulierte Träger erste Intervalle aufweist, in denen die Phase stabil und gleich dem Phasenzustand am Ende des vorhergehenden Intervalls ist als Antwort auf einen binären Zustand in einem Grundintervall des digitalen Signals gleich demjenigen im vorhergehenden Intervall, und zweite Intervalle aufweist, in denen die Phase linear zwischen zwei aufeinanderfolgenden Phasenzuständen als Antwort auf ein Intervall des digitalen Signals, das mit einem binären Übergang beginnt, variiert, wobei die Richtung der Phasendrehung am Anfang eines zweiten Intervalls als Funktion einer Variablen (x, $\alpha$) bestimmt wird.

2. Verfahren mit zwei Phasenzuständen (0, $\pm \pi$) nach Anspruch 1, dadurch gekennzeichnet, daß der modulierte Träger einem modulierten Signal mit drei Frequenzzuständen entspricht, einem mittleren Frequenzzustand bei der Frequenz ($f_0$) des Trägers, während die Phase stabil in den ersten Intervallen ist, und ersten und zweiten Frequenzzuständen ($f_1$, $f_2$), während die Phase in den zweiten Intervallen linear variiert und die Variable (x), die die Richtung der Phasendrehung anzeigt, negativ oder positiv ist, wobei die Differenz zwischen dem mittleren Zustand ($f_0$) und einem der ersten und zweiten Frequenzzustände ($f_1$, $f_2$) eine Frequenzabweichung ($\Delta f$) um die Hälfte (F/2) der Frequenz des eintreffenden digitalen Signals definiert.

3. Verfahren mit vier Phasenzuständen (0, $+\pi/2$, $+\pi$, $-\pi/2$) nach Anspruch 1, dadurch gekennzeichnet, daß
   - das eintreffende digitale Signal (D) aus zwei parallelen digitalen Signalen (I, Q) zusammengesetzt ist, die jeweils gerade und ungerade Bits des eintreffenden digitalen Signals enthalten und vier parallele gerade und ungerade Bit-Paare beinhalten, die jeweils mit vier Phasenzuständen verbunden sind, wobei ein Paar während eines Intervalls übertragen wird, und
   - der modulierte Träger einem modulierten Signal mit drei Frequenzzuständen entspricht, einem mittleren Frequenzzustand ($f_0$) des Trägers, während die Phase in den ersten Intervallen stabil ist, und ersten und zweiten Frequenzzustände ($f_1$, $f_2$), während die Phase in den zweiten Intervallen linear variiert und die Variable ($\alpha$), die die Richtung der Phasendrehung anzeigt, negativ oder positiv ist,
   - die Differenz zwischen dem mittleren Zustand ($f_0$) und einem der ersten und zweiten Frequenzzustände ($f_1$, $f_2$) eine Frequenzabweichung ($\Delta f$) um ein Viertel (F/4) der Frequenz des eintreffenden digitalen Signals definiert, und

- Übergänge von einem der ersten und zweiten Frequenzzustände ($f_1$, $f_2$) in den anderen, notwendigerweise über den mittleren Frequenzzustand ($f_0$) erfolgen.

4. Verfahren nach Anspruch 3, dadurch gekennzeichnet, daß die parallelen digitalen Signale (I, Q) keine vier Übergänge von zwei aufeinanderfolgenden Paaren, von Bits aufweisen, die Phasensprüngen mit einer Amplitude von $\pm\pi$ entsprechen.

5. Phasenmodulator (1) zur Durchführung des Verfahrens nach einem der Ansprüche 2 - 4, dadurch gekennzeichnet, daß er Einrichtungen (10), die das eintreffende digitale Signal (D) empfangen, zur Codierung des eintreffenden Signals (D) als Funktion der Variablen (x) in ein ternäres Signal (TE) mit drei Zuständen (-1, 0, +1), die den drei Frequenzzuständen ($f_1$, $f_0$, $f_2$) entsprechen, einen spannungsgesteuerten Oszillator (110), einen Phasenkomparator (112) mit einem Eingang, der mit dem Ausgang des Oszillators (110) über einen Frequenzteiler um eine ganze Zahl A verbunden ist, und mit einem anderen Eingang, der eine Frequenz $f_p$ empfängt, und einen Addierer (115) für die Addition eines Ausgangssignals des Komparators und des ternären Signals (TE) zu einem Spannungssteuerungssignal des Oszillators aufweist, wobei der Oszillator das modulierte Signal mit den drei Frequenzzuständen ($f_1$, $f_0$, $f_2$) erzeugt und der mittlere Frequenzzustand ($f_0$) des modulierten Signals gleich $Af_p$ ist.

6. Phasenmodulator zur Durchführung des Verfahrens nach einem der Ansprüche 2 - 4, dadurch gekennzeichnet, daß er Einrichtungen (20), die das eintreffende digitale Signal (D) mit einem Zeitsignal (H) mit der Frequenz (F) des eintreffenden Signals empfangen, zur Codierung des eintreffenden Signals (D) als Funktion der Variablen (x) in drei digitale Koeffizienten ("6", "4", "3"), die jeweils den drei Frequenzzuständen ($f_1$, $f_0$, $f_2$) entsprechen, einen Frequenzmultiplikator (22) zur Multiplikation der Frequenz (F) des Zeitsignals (H) mit einer vorgegebenen ganzen Zahl in ein Multiplikationssignal (12F), und Frequenzteiler (21, 23) aufweist, die von den Einrichtungen zum Codieren (20) programmierbar sind, um die Frequenz des Multiplikationssignals (12F) jeweils durch die digitalen Koeffizienten ("6", "4", "3") in das modulierte Signal mit den drei Frequenzzuständen ($f_1$, $f_0$, $f_2$^] zu teilen.

7. Modulator nach Anspruch 6, dadurch gekennzeichnet, daß die vorgegebene ganze Zahl ("12") dem kleinsten gemeinsamen Vielfachen der drei Koeffizienten ("6", "4", "3") entspricht.

8. Phasenmodulator (3, 4) zur Durchführung des Verfahrens nach einem der Ansprüche 2 - 4, dadurch gekennzeichnet, daß er Einrichtungen (30, 40), die das eintreffende digitale Signal (D) mit einem Zeitsignal (H) mit der Frequenz (F) des eintreffenden Signals empfangen, zur Codierung des eintreffenden Signals (D) als Funktion der Variablen (x, $\alpha$) in drei digitale Inkremente ($W_1$, $W_0$, $W_2$), die jeweils den drei Frequenzzuständen ($f_1$, $f_0$, $f_2$) entsprechen, einen Speicher (311, 411), der die digitalen Abtastwerte einer Sinus-Periode (SINUS), die gleichmäßig über diese verteilt sind und eine vorgegebene Anzahl ($2^P$) aufweisen, gespeichert hat, Einrichtungen (33, 43) zur Erzeugung einer Abtastfrequenz (FE), die höher als und synchron zur Frequenz F des Zeitsignals (H) ist, von der Abtastfrequenz (FE) gesteuerte Additionseinrichtungen für Adressen (312, 313; 412, 413), zur Erzeugung von Abtastleseadressen, die auf den Speicher (311, 411) gegeben und durch Addition des Inkrements ($W_1$ oder $W_0$ oder $W_2$), das von den Codiereinrichtungen (30, 40) als Antwort auf jede Periode des Abtastsignals geliefert wird, kumuliert werden, und Einrichtungen (32, 42) zum Konvertieren der von den kumulierten Adressen in den Speicher (311, 411) eingelesenen Abtastwerten in das modulierte Signal aufweist, wobei die drei Frequenzzustände ($f_1$, $f_0$, $f_2$) des modulierten Signals jeweils mit den entsprechenden drei Inkrementen ($W_1$, $W_0$, $W_2$) in einer konstanten Beziehung stehen, die gleich der Beziehung der Abtastfrequenz (FE) zu der vorgegebenen Zahl von Abtastwerten ($2^P$) ist.

9. Modulator nach Anspruch 8, dadurch gekennzeichnet, daß der Speicher (311, 411) $2^P$ digitale Abtastwerte enthält, und daß die Einrichtungen zur Addition außerdem ein Adressregister (312, 412) mit P parallelen Stufen, deren Ausgänge mit den Leseadresseingängen des Speichers verbunden sind und die von der Abtastfrequenz (FE) gesteuert werden, und einen Modulo-$2^P$-Adressaddierer mit ersten Eingängen (3131, 4131), die mit den Ausgängen des Registers (312, 412) verbunden sind, mit zweiten Eingängen, die mit den Ausgängen der Codiereinrichtungen (30, 40), die das digitale Inkrement ($W_1$, $W_0$, $W_2$) liefern, verbunden sind, und mit Ausgänge, die mit den Eingängen der Stufen des Registers verbunden sind, aufweisen.

10. Modulator nach Anspruch 8 oder 9, dadurch gekennzeichnet, daß die Einrichtungen zur Erzeugung der Abtastfrequenz (43) einen Frequenzteiler (431) zum Teilen der Frequenz des Zeitsignals (F oder F/2) durch einen Faktor (M), der proportional zu einem Index der Frequenzmodulation (β) ist, und eine Zeitregelschleife (432 bis 435), die mit dem Ausgang des Frequenzteilers (431) zur Erzeugung der Abtastfrequenz verbunden ist, aufweisen.

**11.** Modulator nach Anspruch 9 und 10, dadurch gekennzeichnet, daß die Regelschleife einen Frequenzteiler (33; 435) durch $2^{P-x}$ aufweist, wobei x eine ganze Zahl gröber oder gleich 1 oder 2 ist.

**12.** Modulator nach einem der Ansprüche 8 - 11 zur Durchführung des Verfahrens nach Anspruch 3 oder 4, dadurch gekennzeichnet, daß die Codiereinrichtungen am Eingang Einrichtungen (401, 402, 403), die die beiden digitalen Signale mit jeweils geraden und ungeraden Bits (I, Q) empfangen, zur gleichzeitigen Erzeugung von zwei aufeinanderfolgenden Paaren von geraden und ungeraden Bits ($I_{n-1}$, $Q_{n-1}$; $I_n$, $Q_n$), und Einrichtungen (404), die den Wert der Variablen ($\alpha$=0), der einen stabilen Phasenzustand für jede Kombination von gleichen Paaren anzeigt und zwei entgegengesetzte Zustände der Variablen ($\alpha$=$\pm$1) für jede Kombination von unterschiedlichen Paaren, die einem Phasensprung um $\pm\pi/2$ entsprechen, gespeichert haben, um die den Kombinationen entsprechenden digitalen Inkremente ($W_0$, $W_1$, $W_2$) zu erzeugen, aufweisen.

**13.** Modulator nach Anspruch 12, dadurch gekennzeichnet, daß die Einrichtungen zum gleichzeitigen Erzeugen von zwei aufeinanderfolgenden Paaren eine erste Kippschaltung (401), die eines (Q) der beiden parallelen digitalen Signale (I, Q) empfängt, eine zweite Kippschaltung (402), die das andere digitale Signal (I) empfängt, und eine dritte Kippschaltung (401), die mit dem Ausgang der ersten Kippschaltung (401) verbunden ist, aufweisen, wobei die Kippschaltungen von einem Zeitsignal (h) mit der halben Frequenz (F/2) des eintreffenden Signals (D) gesteuert werden und der Eingang der zweiten Kippschaltung (402) und die Ausgänge der drei Kippschaltungen (401, 402, 403) mit den Leseadresseingängen der Einrichtung (404), die den Wert der Variablen ($\alpha$) gespeichert haben, verbunden sind.

## Claims

**1.** Process for modulating the phase of a carrier having a predetermined frequency ($f_0$) as a function of an incoming numerical signal having a predetermined binary frequency (F) in a modulated carrier having uniformly distributed phase states, characterised in that the modulated carrier has first intervals in which the phase is stable and equal to the phase state at the end of the preceding interval in response to a binary state in an elementary interval of the numerical signal equal to that in the preceding interval, and second intervals in which the phase varies in linear manner between two consecutive phase states in response to an interval in the numerical signal starting with a binary transition, the direction of rotation of the phase at the start of a second interval being determined as a function of a variable (x, $\alpha$).

**2.** Process with two phase states (0, $\pm\pi$) in accordance with claim 1, characterised in that the modulated carrier is equivalent to a modulated signal having three frequency states, a central frequency state equal to the frequency ($f_0$) of the carrier when said phase is stable in said first intervals, and first and second frequency states ($f_1$, $f_2$) respectively when the phase varies in linear manner in said second intervals and said variable (x) indicating the direction of phase rotation is negative or positive, the difference between the central state ($f_0$) and one of the first and second frequency states ($f_1$, $f_2$) defining a frequency deviation ($\Delta f$) equal to half (F/2) the frequency of the incoming numerical signal.

**3.** Process with four phase states (0, $+\pi/2$, $+\pi$, $-\pi/2$) according to claim 1, characterised in that the incoming numerical signal (D) is made up of two parallel numerical signals (I, Q) having, respectively, even and odd bits of the incoming numerical signal and including four pairs of parallel even and odd bits, respectively, associated with the four phase states, a pair being transmitted in an interval, and the modulated carrier is equivalent to a modulated signal having three frequency states, a central frequency state equal to the frequency ($f_0$) of the carrier when said phase is stable in said first intervals, and first and second frequency states ($f_1$, $f_2$) respectively when the phase varies in linear manner in said second intervals and said variable ($\alpha$) indicating the direction of rotation of the phase is negative or positive, the difference between the central state ($f_0$) and one of the first or second frequency states ($f_1$, $f_2$) defining a frequency deviation ($\Delta f$) equal to a quarter (F/4) of the frequency of the incoming numerical signal, and transitions from one of the first and second frequency states ($f_1$, $f_2$) to the other necessarily passing through the central frequency state ($f_0$).

4. Process according to claim 3, characterised in that the parallel numerical signals (I, Q) do not comprise four transitions of two consecutive pairs of bits corresponding to phase shifts having an amplitude of $\pm\pi$.

5. Phase modulator (1) for carrying out the process according to any one of claims 2 to 4, characterised in that it comprises means (10) receiving the incoming numerical signal (D) in order to code, as a function of said variable (x), the incoming signal (D) into a ternary signal (TE) having three states (-1, 0, +1) corresponding respectively to the three frequency states $(f_1, f_0, f_2)$, a voltage-controlled oscillator (110), a phase comparator (112) having an input connected to the output of the oscillator (110) across a frequency divider by an integer A and another input receiving a frequency $f_p$, and an adder (115) adding an output signal of the comparator and the ternary signal (TE) to produce a voltage control signal for the oscillator, said oscillator producing the modulated signal with the three frequency states $(f_1, f_0, f_2)$, the central frequency state $(f_0)$ of the modulated signal being equal to $Af_p$.

6. Phase modulator (2) for carrying out the process according to any one of claims 2 to 4, characterised in that it comprises means (20) for receiving the incoming numerical signal (D) with a timing signal (H) having the frequency (F) of the incoming signal in order to code, as a function of said variable (x), the incoming signal (D) into three numerical coefficients ("6", "4" "3") corresponding respectively to the three frequency states $(f_1, f_0, f_2)$, a frequency multiplier (22) for multiplying the frequency (F) of the timing signal (H) by a predetermined integer, to obtain a multiplication signal (12F), and frequency dividing means (21, 23) programmable by the means for coding (20) in order to divide the frequency of the multiplication signal (12F) respectively by the numerical coefficients ("6", "4", "3") to obtain the modulated signal with said three frequency states $(f_1, f_0, f_2)$.

7. Modulator according to claim 6, characterised in that the predetermined integer ("12") is equal to the lowest common multiple of the three coefficients ("6", "4", "3")

8. Phase modulator (3, 4) for carrying out the process according to any one of claims 2 to 4, characterised in that it comprises means (30, 40) for receiving the incoming numerical signal (D) with a timing signal (H) having the frequency (F) of the incoming signal in order to code, as a function of said variable (x, $\alpha$), the incoming signal (D) in three numerical increments $(W_1, W_0, W_2)$ respectively corresponding to three frequency states $(f_1, f_0, f_2)$, a memory (311, 411) having memorised the numerical samples of a sinusoidal period (SINUS) uniformly distributed therein and in a predetermined number $(2^p)$, means (33, 43) for producing a sampling frequency (FE) higher than and synchronous with the frequency F of the timing signal (H), address adding means (312, 313; 412, 413) controlled by the sampling frequency (FE) in order to produce sample reading addresses applied to the memory (311, 411) and accumulated by the addition of the increment $(W_1$ or $W_0$ or $W_2)$ supplied by the coding means (30, 40) in response to each period of the sampling signal, and means (32, 42) for converting the samples read in the memory (311, 411) by the accumulated addresses into said modulated signal, said three frequency states $(f_1, f_0, f_2)$ of the modulated signal being respectively, with the three respective increments $(W_1, W_0, W_2)$ in a constant ratio equal to the ratio of the sampling frequency (FE) and the predetermined number of samples $(2^p)$.

9. Modulator according to claim 8, characterised in that the memory (311, 411) has $2^p$ numerical samples, and in that the adding means further comprise an address register (312, 412) having P parallel stages in which the outputs are connected to address inputs for reading the memory and are controlled by the sampling frequency (FE), and a modulo-$2^p$ address adder having first inputs (3131, 4131) connected to the register outputs (312, 412), second inputs connected to the outputs of the coding means (30, 40) supplying a numerical increment $(W_1, W_0, W_2)$, and outputs connected to the inputs of the stages of the register.

10. Modulator according to claim 8 or 9, characterised in that the means for producing the sampling frequency (43) comprise a frequency divider (431) for dividing the frequency of the timing signal (F or F/2) by a factor (M) proportional to an index of the frequency modulation ($\beta$), and a timing servo-loop (432 to 435) connected to the output of the frequency divider (431) in order to produce the sampling frequency.

11. Modulator according to claims 9 and 10, characterised in that the servo-loop comprises a frequency divider (33; 435) by $2^{p-x}$ where x is an integer equal to or greater than 1 or 2.

12. Modulator according to any one of claims 8 to 11 for carrying out the process according to claim 3 or 4, characterised in that the coding means comprise as their input means (401, 402, 403) for receiving said two numerical signals having, respectively, even and odd bits (I, Q) in order to produce simultaneously two consecutive pairs of even and odd bits ($I_{n-1}$, $Q_{n-1}$; $I_n$, $Q_n$) and means (404) having memorised the value of the variable ($\alpha=0$) indicating a stable phase state for each combination of equal pairs and two opposite states of the variable ($\alpha=+1$) for each combination of different pairs corresponding to a phase shift of $\pm\pi/2$ in order to produce the numerical increments ($W_0$, $W_1$, $W_2$) corresponding to said combinations of pairs.

13. Modulator according to claim 12, characterised in that the means for simultaneously producing two consecutive pairs comprise a first flip-flop (401) receiving one (Q) of the two parallel numerical signals (I,Q), a second flip-flop (402) receiving the other numerical signal (I), and a third flip-flop (401) connected to the output of the first flip-flop (401), said flip-flop being controlled by a timing signal (h) with half (F/2) the frequency of the incoming signal (D), and the input of said second flip-flop (402) and the outputs of the three flip-flop (401,402,403) being connected to address inputs for reading the means (404) which have memorised the values of the variable ($\alpha$).

# FIG.1

# FIG.2A

# FIG.2B

# FIG.2C

# FIG.3

# FIG.10

## FIG. 4

$D$ → **CODEUR A 3 SAUTS DE FREQUENCE (x)** — 10

$H(F=1/T)$

$TE$

114 — $\int f$

11

112

113 — $\sim f_p$

115 — $+$

110 — **VCO**

111 — $\div A$

1

$\begin{cases} f_2 = Af_p + \Delta f \\ f_0 = Af_p \\ f_1 = Af_p - \Delta f \end{cases}$

## FIG. 5

22 — **12xF**

21 — $\div \begin{Bmatrix} 3 \\ 4 \\ 6 \end{Bmatrix}$

23 — $\div 2$

$\begin{cases} f_2 = 2F \\ f_0 = 1,5F \\ f_1 = F \end{cases}$

coef. programmables

20 — **CODEUR A 3 SAUTS DE FREQUENCE (x)**

2

$H(F=1/T)$

$D$

FIG.6

$$D \rightarrow$$

$$\underset{30}{\boxed{\begin{array}{c}\text{CODEUR A}\\\text{3 SAUTS DE}\\\text{FREQUENCE}\end{array}}}$$

$$W_2$$
$$W_0$$
$$W_1$$
$$P$$

$$H(F=1/T)$$

OSCILLATEUR NUMERIQUE

$$3132 \qquad 3131 \qquad 312 \qquad P$$

$$\boxed{\begin{array}{c}\oplus\\\text{MODULO } 2^P\end{array}} \; {}^P \; \boxed{\begin{array}{c}\text{REGISTRE}\\\text{P bits}\end{array}} \; {}^P \; \boxed{\begin{array}{c}\text{ROM}\\\text{SINUS}\\2^P \text{x 8 bits}\end{array}}$$

$$313 \qquad\qquad 311$$

$$f=(W/2^P)FE$$

$$\boxed{N/A} \quad f_2 \\ f_0 \\ f_1$$

$$32$$

$$31$$

$$\underset{33}{\boxed{\text{x k}}} \qquad\qquad FE=kF$$

FIG.7

SINUS

$$W$$

$$2^P \text{ échantillons}$$

EP 0 369 832 B1

FIG.8

Q=1

3π/4; −5π/4
(0,1)

π/4
(1,1)

(I,Q)

I=0

I=1

5π/4; −3π/4
(0,0)

7π/4; −π/4
(1,0)

Q=0

FIG.9A

I $\frac{1}{0}$

T

FIG.9B

Q $\frac{1}{0}$

FIG.9C

ø(t)

7π/4
5π/4
3π/4
π/4
−π/4
−3π/4
−5π/4

FIG.9D

f(t)

$f_0 + \Delta f$
$\Delta f = F/4 = 1/(4T)$ $f_0$
$\Delta f$ $f_0 - \Delta f$

# FIG.11

EP 0 369 832 B1

CIRCUIT DE CODAGE D'INCREMENT

CIRCUIT D'ASSERVISSEMENT D'HORLOGE

OSCILLATEUR NUMERIQUE

FIG.12

π/2 (0,0)

I=0    Q=0

(I,Q)

α_n=+1

+π
(0,1)

0
(1,0)

α_n=−1

Q=1    I=1

−π/2
(1,1)

FIG.13

| $I_{n-1}$ | $Q_{n-1}$ | $I_n$ | $Q_n$ | $\alpha_n$ | f |
|---|---|---|---|---|---|
| 0 | 0 | 0 | 0 | 0 | $f_0$ |
| 0 | 0 | 0 | 1 | +1 | $f_2$ |
| 0 | 0 | 1 | 0 | −1 | $f_1$ |
| 0 | 0 | 1 | 1 | * | * |
| 0 | 1 | 0 | 0 | −1 | $f_1$ |
| 0 | 1 | 0 | 1 | 0 | $f_0$ |
| 0 | 1 | 1 | 0 | * | * |
| 0 | 1 | 1 | 1 | +1 | $f_2$ |
| 1 | 0 | 0 | 0 | +1 | $f_2$ |
| 1 | 0 | 0 | 1 | * | * |
| 1 | 0 | 1 | 0 | 0 | $f_0$ |
| 1 | 0 | 1 | 1 | −1 | $f_1$ |
| 1 | 1 | 0 | 0 | * | * |
| 1 | 1 | 0 | 1 | −1 | $f_1$ |
| 1 | 1 | 1 | 0 | +1 | $f_2$ |
| 1 | 1 | 1 | 1 | 0 | $f_0$ |

# FIG.14A

$I_n$(Sortie 402)

# FIG.14B

$Q_n$(Sortie 403)

# FIG.14C

10 11 01 00 10

T

H

# FIG.14D

$f_2 = f_0 + \Delta f; \alpha_n = 1$

$f_0; \alpha_n = 0$

$f_1 = f_0 - \Delta f; \alpha_n = -1$

# FIG.14E

$\phi(t)$

$\pi$

$+\pi/2$

$0$

$-\pi/2$

$-\pi$

EP 0 369 832 B1